# FASCICULE DE BREVET EUROPEEN

(11) **EP 1 987 292 B1**
(45) Date de publication et mention de la délivrance du brevet: **24.10.2018**
(21) Numéro de dépôt: 07712167.1
(22) Date de dépôt: 08.02.2007
(51) Int. Cl.: F25B 1/10, F25B 43/02, F28D 7/10, F28D 1/02, F24D 3/18, F25B 30/02, F28D 7/14, F25B 25/00, F28D 7/02

(54) **DISPOSITIF ÉCHANGEUR DE CHALEUR DESTINÉ AUX SYSTÈMES DE CHAUFFAGE OU DE CLIMATISATION**
FÜR HEIZ- ODER LUFTKLIMATISIERUNGSSYSTEME BESTIMMTE WÄRMETAUSCHERVORRICHTUNG
HEAT EXCHANGER DEVICE INTENDED FOR HEATING OR AIR-CONDITIONING SYSTEMS

(30) Priorité: 09.02.2006 FR 0601181
(43) Date de publication de la demande: 05.11.2008
(73) Titulaire: Electricité de France, 75008 Paris (FR)
(72) Inventeur: RITZ, Jean-Benoit, F-77250 Moret sur Loing (FR); HORBER, Bernard, 77810 Champagne sur Seine (FR); COEVOET, Michel, 77810 Thomery (FR)
(74) Mandataire: Regimbeau
(86) Numéro de dépôt international: PCT/EP2007/051202
(87) Numéro de publication internationale: WO 2007/090861

(56) Documents cités:
- EP-A- 0 870 993
- EP-A2- 1 103 775
- US-A- 3 921 708
- US-A1- 2003 196 450

## Description

### DOMAINE TECHNIQUE DE L'INVENTION

La présente invention concerne le domaine des échangeurs de chaleur, ainsi que le domaine des systèmes faisant application de tels échangeurs, en particulier les systèmes de chauffage ou de climatisation, qu'ils soient réversibles ou non.

### ETAT DE LA TECHNIQUE

On connaît de nombreux systèmes de chauffage ou de climatisation, dans lesquels un fluide caloporteur, circulant dans un circuit primaire, est chauffé ou refroidi par un générateur de calories ou frigories (qui peut être par exemple une pompe à chaleur), et vient échanger ses calories ou frigories avec un liquide caloporteur d'un circuit secondaire (destiné par exemple au chauffage ou à la climatisation d'une maison) au moyen d'un échangeur.

De nombreux types d'échangeurs ont également été proposés à cette fin. Généralement on classe ces échangeurs en trois familles : 1) les échangeurs à plaque, 2) les échangeurs multitubulaires et 3) les échangeurs de type coaxial.

Les échangeurs à plaque présentent l'avantage d'être compacts. Mais ils présentent deux inconvénients majeurs.

En premier lieu, les échangeurs à plaque requièrent que les fluides caloporteurs qui les traversent soient relativement propres pour éviter leur encrassement. De ce fait les échangeurs à plaque sont peu adaptés à des réseaux de chauffage ou de climatisation, dans la mesure où les circuits de ces réseaux véhiculent souvent des particules issues de la corrosion et de l'usure des circuits. Qui plus est ces particules sont généralement d'une taille trop réduite pour être retenue par des filtres. Ainsi lorsque des échangeurs à plaque sont mis en place sur de telles installations, les particules forment des boues qui à terme provoquent généralement l'encrassement des échangeurs à plaques.

En second lieu, lorsqu'ils sont couplés avec une pompe à chaleur, les échangeurs à plaque ne donnent pas totalement satisfaction. Ils peuvent présenter notamment les deux inconvénients suivants.

D'une part en cas d'arrêt brusque du débit de liquide caloporteur dans le circuit secondaire, les calories (respectivement les frigories) du fluide caloporteur primaire ne sont plus évacuées, provoquant une montée (respectivement descente) rapide en température du fluide caloporteur primaire, et donc une montée (respectivement une chute) rapide en pression liée au cycle thermodynamique du fluide. Comme la masse de fluide, typiquement de l'eau, emprisonné dans l'échangeur est très faible, ce phénomène est trop rapide pour que le régulateur de température de sortie du fluide de la pompe à chaleur (ou une sonde de température située dans un ballon contenant cet échangeur) ait le temps d'agir avant que la sécurité haute pression (respectivement basse pression) ne fasse déclencher la pompe à chaleur. Cela oblige donc l'utilisateur à réarmer manuellement la pompe à chaleur, ce qui n'est pas concevable pour un fonctionnement normal du système.

D'autre part dans le cas où le circuit secondaire alimente un ensemble d'émetteurs montés en parallèle et que ceux-ci peuvent réguler leur débit indépendamment les uns des autres, on peut avoir sur une courte période une diminution brusque de débit couplée à une augmentation (respectivement diminution) brusque de retour de la température du liquide secondaire. Le régulateur de température peut alors arrêter la pompe à chaleur, augmentant ainsi le cycle de marche-arrêt de la pompe à chaleur, ce qui est préjudiciable à sa durée de vie.

Les échangeurs multitubulaires ne présentent pas les inconvénients précités des échangeurs à plaque, à condition que les diamètres de tube soient suffisamment importants pour le passage des fluides. Mais la conséquence est que ces échangeurs sont, à puissance thermique égale, de taille nettement plus importante que les échangeurs à plaque, ce qui est un inconvénient important dans le domaine de l'invention en particulier dans les habitations domestiques.

Les échangeurs de type coaxial peuvent être considérés comme un compromis entre les échangeurs à plaque et les échangeurs multitubulaires. A puissance thermique égale, ils sont certes moins compacts que les échangeurs à plaque, mais ils sont moins sensibles à l'encrassement, tout en gardant une taille plus réduite que les échangeurs multitubulaires. Cependant les échangeurs de type coaxial présentent les inconvénients cités précédemment en second lieu pour les échangeurs à plaque, au moins dans certaines configurations.

On trouvera des exemples d'échangeurs connus dans les documents FR-A-2 856 469 et FR-A-2 845 150. Le document FR-A-2 856 469 décrit un échangeur à plaque placé dans un ballon. Un tel système présente des défauts d'encrassement. Le document FR-A-2 845 150 décrit un système comprenant un ballon rempli de fluide secondaire caloporteur et qui loge un serpentin parcouru par un fluide frigorigène de sorte que ce dernier cède des calories à ce fluide secondaire. Ce système permet d'éviter l'encrassement et permet d'éviter les inconvénients cités en second lieu pour les échangeurs à plaque. Par contre sa capacité d'échange en regard du volume occupé est limitée.

Les documents US 2003/196450 et US 3921708 décrivent un échangeur thermique solénoïde à double serpentins coaxiaux dans lequel le canal interne de l'échangeur constitue un circuit fermé tandis que le canal externe de l'échangeur débouche dans une cuve.

Le document EP 1103775 décrit un autre échangeur thermique solénoïde à double serpentins coaxiaux placé dans un ballon, le canal externe de l'échangeur recevant sur une entrée un fluide primaire provenant d'un système de chauffage et libérant ce fluide primaire vers le système de chauffage au niveau d'une sortie, tandis que le canal interne reçoit un flux d'entrée de fluide secondaire et a sa sortie qui débouche dans la partie inférieure de la cuve, le prélèvement de fluide secondaire étant opéré par une canalisation qui débouche dans la partie supérieure de la cuve.

Le document EP 0870993 A1 divulgue le préambule de la revendication 1.

### BASE DE L'INVENTION

La présente invention a maintenant pour but de proposer un nouvel échangeur de chaleur qui évite les inconvénients précités. La présente invention a en particulier pour but de proposer un échangeur de chaleur qui, tout en restant relativement compact, présente une sensibilité réduite à l'encrassement et aux interruptions ou brusques diminutions de débit et de variations de la température du liquide du circuit secondaire.

Le but précité est atteint dans le cadre de la présente invention, grâce à un dispositif échangeur de chaleur du type défini en revendication 1 annexée.

### DESCRIPTIF RAPIDE DES FIGURES

D'autres caractéristiques, buts et avantages de la présente invention apparaîtront à la lecture de la description détaillée qui va suivre et en regard des dessins annexés, donnés à titre d'exemples non limitatifs et sur lesquels :

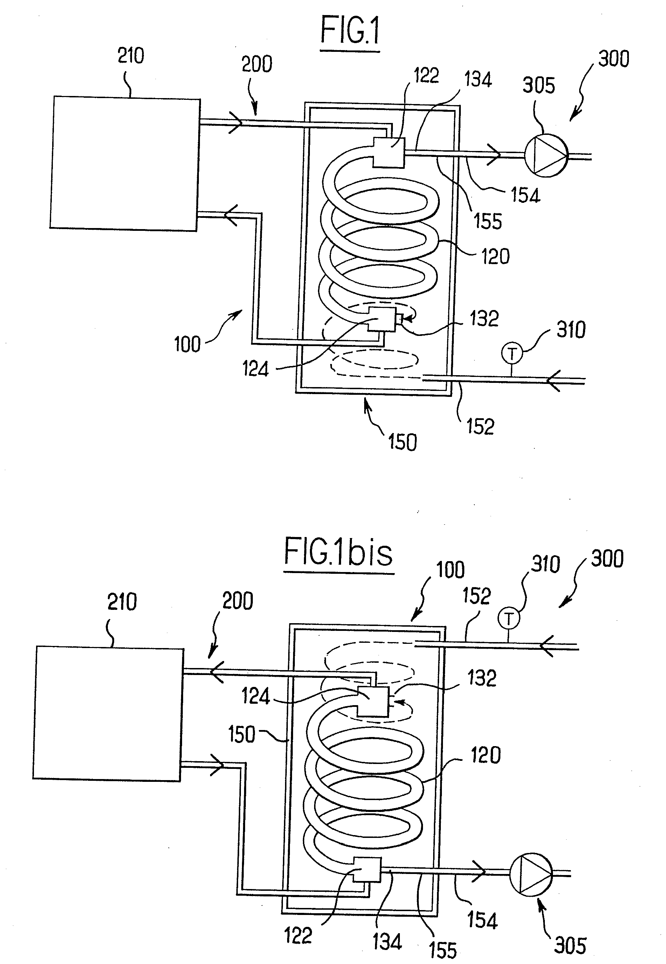

- la figure 1 représente une vue schématique, en coupe verticale du ballon, d'un dispositif échangeur thermique conforme à un premier mode de réalisation de la présente invention,
- la figure 1bis représente, selon une vue schématique similaire, une variante du dispositif illustré sur la figure 1,
- la figure 2 représente une vue schématique, en coupe verticale du ballon, d'un dispositif échangeur thermique adapté pour éviter une stagnation de liquide secondaire en extrémité du ballon,

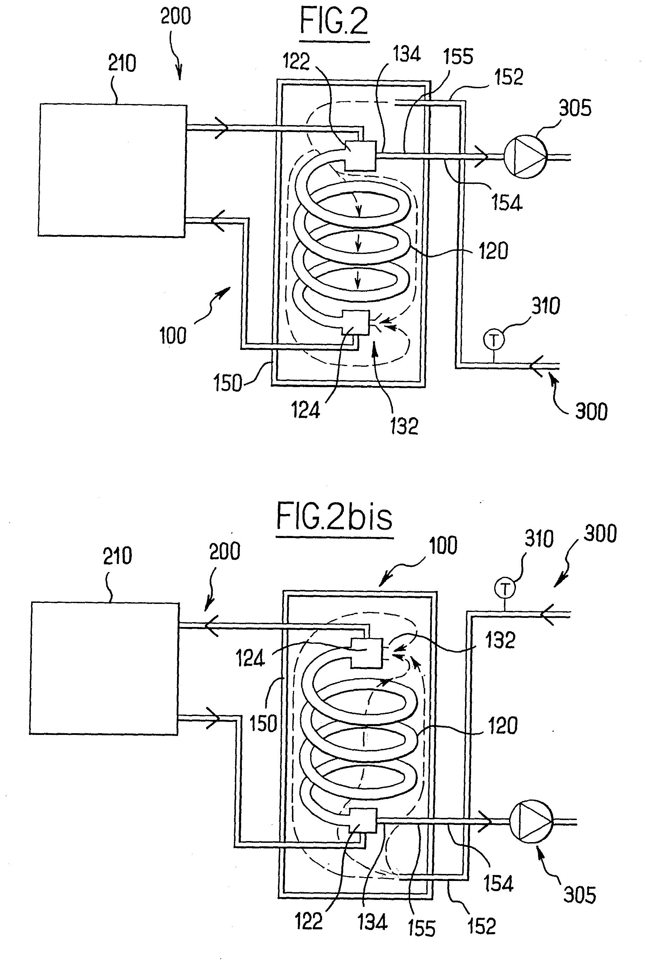

- la figure 2bis représente, selon une vue schématique similaire, une variante du dispositif illustré sur la figure 2,

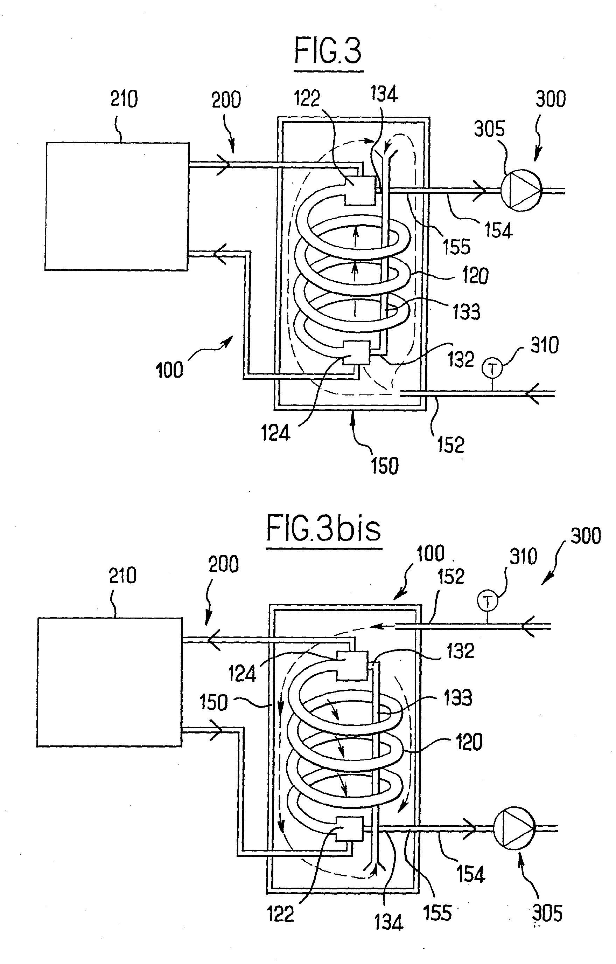

- la figure 3 représente une vue schématique, en coupe verticale du ballon, d'un dispositif échangeur thermique conforme à un mode de réalisation de la présente invention, comportant une entrée de serpentin secondaire prolongée par un tube,
- la figure 3bis représente, selon une vue schématique similaire, une variante du dispositif illustré sur la figure 3,

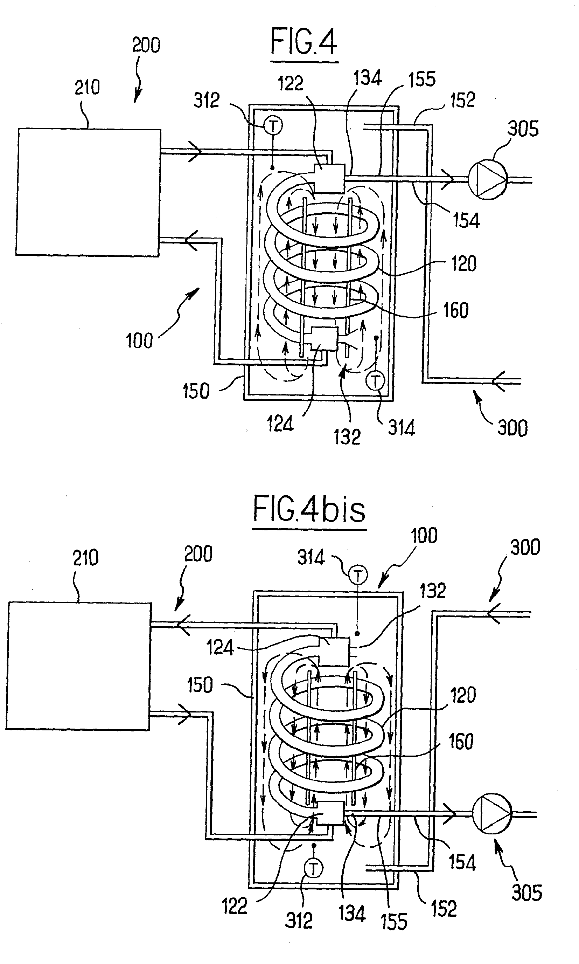

- la figure 4 représente une vue schématique, en coupe verticale du ballon, d'un dispositif échangeur thermique équipé d'un cylindre conçu pour générer un effet de thermosiphon,
- la figure 4bis représente, selon une vue schématique similaire, une variante du dispositif illustré sur la figure 4,

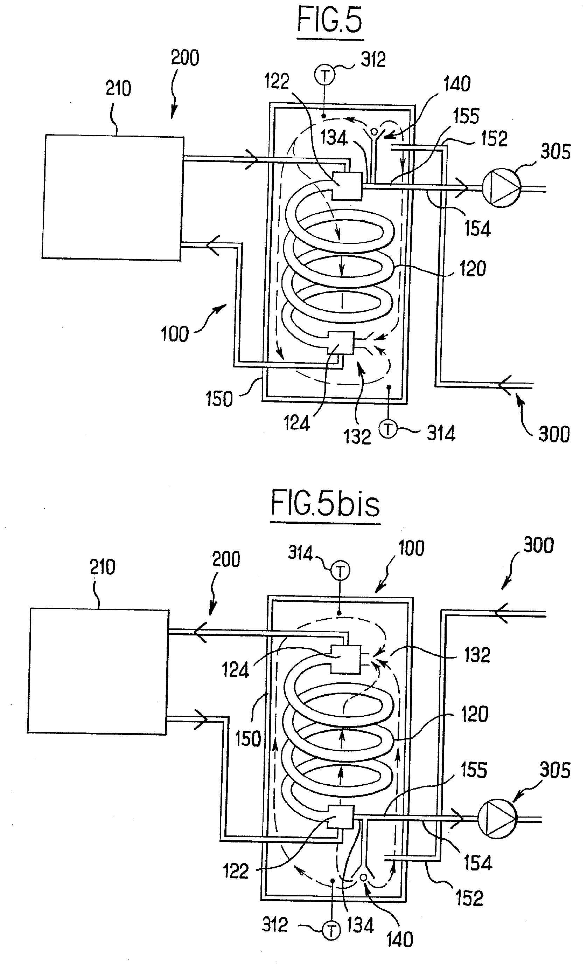

- la figure 5 représente une vue schématique, en coupe verticale du ballon, d'un dispositif échangeur thermique équipé d'un clapet anti-retour,
- la figure 5bis représente, selon une vue schématique similaire, une variante du dispositif illustré sur la figure 5,

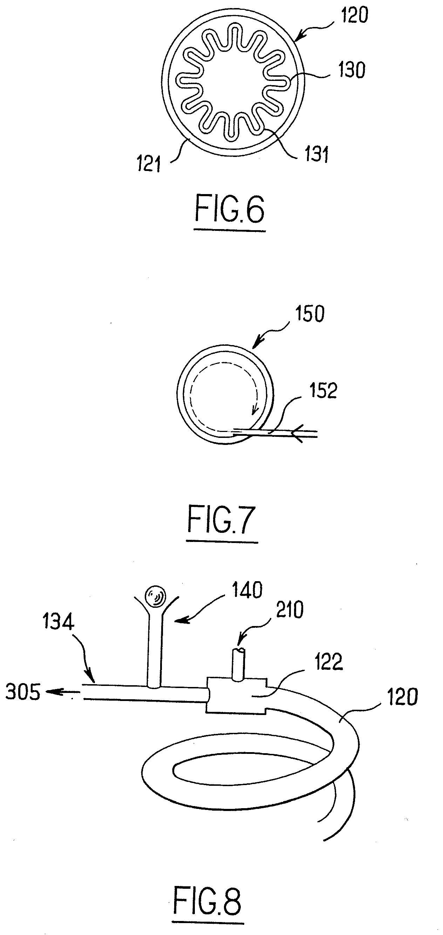

- la figure 6 représente une vue schématique en coupe horizontale d'un solénoïde à tubes coaxiaux conformes à la présente invention,
- la figure 7 représente schématiquement une injection tangentielle de fluide secondaire dans un ballon,
- la figure 8 représente une vue de détail de la sortie d'un serpentin secondaire équipé d'un clapet anti-retour,

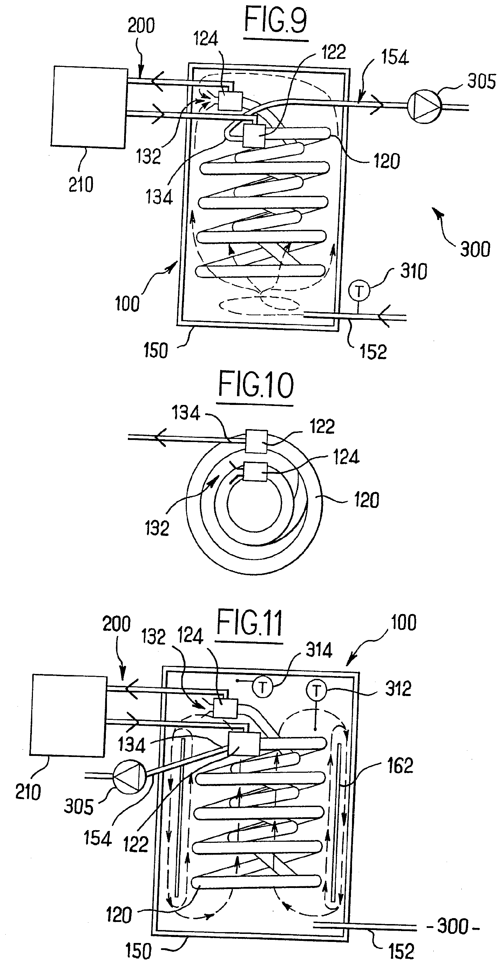

- la figure 9 représente un dispositif dans lequel le solénoïde est replié sur lui-même,
- la figure 10 représente une vue en coupe horizontale d'un tel solénoïde replié sur lui-même, et

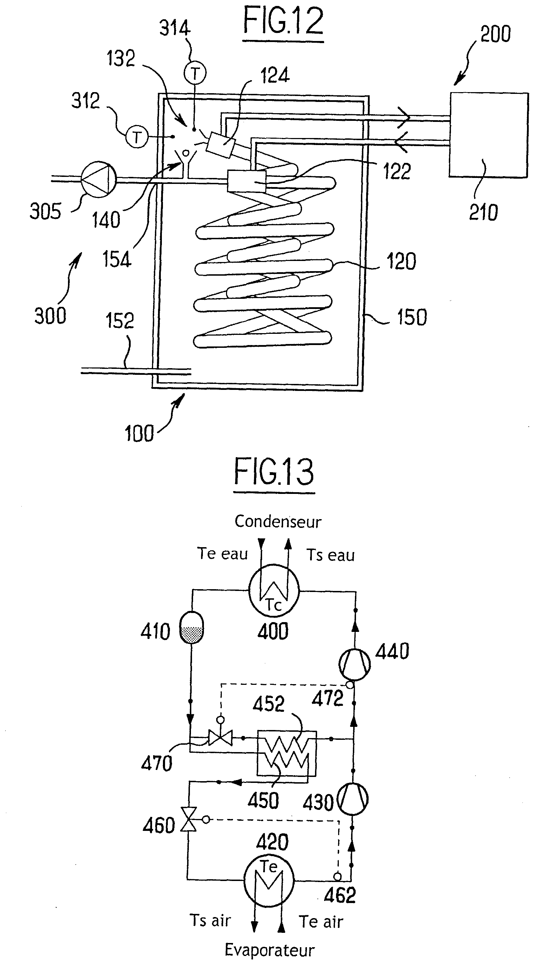

- les figures 11 et 12 représentent respectivement des variantes de la figure 9 équipées d'un cylindre générant un effet thermosiphon et d'un clapet anti-retour générant un effet similaire,
- la figure 13 représente la structure d'une pompe à chaleur du type à cycle bi-étagé et injection partielle,

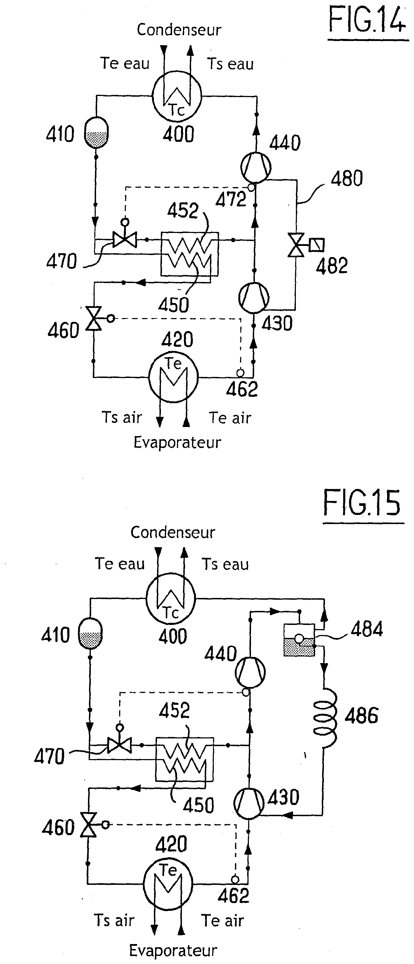

- les figures 14 à 17 représentent différents perfectionnements apportés dans le cadre de la présente invention à une telle pompe à chaleur.

### DESCRIPTION DETAILLEE DE L'INVENTION

On a représenté sur la figure 1 annexée, un dispositif de chauffage ou de climatisation, réversible ou non, comprenant un dispositif échangeur de chaleur 100 adapté pour permettre un échange thermique entre un fluide caloporteur primaire circulant dans un circuit primaire 200 et un fluide caloporteur secondaire circulant dans un circuit secondaire 300. Le fluide caloporteur primaire peut être chauffé ou refroidi par un générateur de calories ou de frigories 210. Le fluide caloporteur secondaire peut être utilisé par exemple directement en tant que fluide de chauffage ou de climatisation.

Comme on l'a indiqué précédemment, dans le cadre de la présente invention, le dispositif échangeur de chaleur 100 comprend d'une part un serpentin 120 comportant une entrée 122 et une sortie 124 de liaison avec le circuit 200 de fluide caloporteur primaire et un ballon 150, formant cuve tampon jouant le rôle d'inertie thermique, dans lequel est placé ce serpentin 120. Le ballon 150 est rempli d'un fluide caloporteur secondaire et comporte une entrée 152 et une sortie 154 de liaison avec le circuit secondaire 300.

Plus précisément, selon l'invention, le serpentin 120 dans lequel circule le fluide caloporteur primaire loge un serpentin secondaire 130 pour former un échangeur solénoïde à tubes coaxiaux comme illustré sur la figure 6. Par ailleurs l'une des liaisons 152 ou 154 avec le circuit secondaire 300 est reliée directement avec l'une des extrémités 132 ou 134 du serpentin secondaire 130 tandis que l'autre liaison 154 ou 152 avec le circuit secondaire 300 ainsi que la deuxième extrémité du serpentin secondaire 130 débouchent dans le ballon 150 à distance respective. Grâce à la structure précitée, les échanges entre le fluide caloporteur primaire et le fluide caloporteur secondaire, dans l'échangeur solénoïde à tubes coaxiaux 120/130 s'opèrent à la fois en convection forcée à l'intérieur de celui-ci (c'est-à-dire au niveau de la paroi 131 formant interface entre les tubes coaxiaux 120 et 130) et en convection naturelle à l'extérieur à celui-ci (c'est-à-dire au niveau de la paroi externe 121 du serpentin 120).

On notera à l'examen de la figure 1 annexée que dans l'échangeur solénoïde à tubes coaxiaux 120/130, les circulations du fluide caloporteur primaire et respectivement du fluide caloporteur secondaire, s'opèrent à contre courant, ie dans des sens opposés.

On notera également à l'examen de la figure 6 que la paroi 131 servant d'interface entre les deux tubes coaxiaux 120 et 130 peut être pourvue de cannelures longitudinales ou toute structure équivalente permettant d'augmenter la surface d'échange thermique entre les deux tubes.

Plus précisément encore selon le dispositif représenté sur la figure 1 annexée, le fluide du circuit primaire 200 est introduit dans un embout 122 lié au serpentin 120 et placé en partie supérieure de l'échangeur, tandis que ce fluide du circuit primaire 200 ressort dans la partie inférieure de l'échangeur, par un deuxième embout 124 formant sortie. Quant au circuit secondaire 300 il débouche en partie inférieure du ballon 150, au niveau de l'entrée 152, sous forme d'une injection tangentielle, comme on le voit sur la figure 7, à distance de l'extrémité inférieure 132 du serpentin secondaire 130, formant entrée, tandis que le départ du liquide du circuit secondaire 300, à partir du ballon 150, est opéré à l'aide d'un tube de sortie 155 qui relie directement la sortie 154 et l'autre extrémité 134, formant sortie, du serpentin secondaire 130, en partie supérieure du ballon. A cette fin l'extrémité de sortie 134 du serpentin secondaire 130 traverse l'embout supérieur 122 et débouche directement dans le tube 155. L'extrémité d'entrée 132 du serpentin secondaire 130 traverse quant à elle l'embout inférieur 124 et débouche dans le ballon 150.

La distance séparant l'entrée 152 du fluide secondaire dans le ballon 150 et l'entrée 132 du serpentin secondaire est adaptée pour former une hauteur tampon propre à éviter que le fluide secondaire ne soit aspiré, dès son introduction dans le ballon 150, par le tube coaxial 130. On évite ainsi que en cas de brusques changements de température de retour du fluide secondaire, ceux-ci ne soient répercutés au niveau de l'entrée de l'échangeur coaxial.

La disposition illustrée sur la figure 1 et précédemment décrite s'applique à un système dans lequel le fluide caloporteur secondaire est un fluide utilisé en refroidissement.

On a illustré sur la figure 1bis une variante de réalisation dans laquelle le fluide caloporteur secondaire est un fluide de chauffage. Dans ce cas, la disposition des entrées 122, 132 et sorties 124, 134 est inversée par rapport à la figure 1.

En effet selon la figure 1bis annexée, le fluide du circuit primaire 200 est introduit dans un embout 122 lié au serpentin 120 et placé en partie inférieure de l'échangeur, tandis que ce fluide du circuit primaire 200 ressort dans la partie supérieure de l'échangeur, par un deuxième embout 124 formant sortie. Quant au circuit secondaire 300 il débouche en partie supérieure du ballon 150, au niveau de l'entrée 152, sous forme d'une injection tangentielle à distance tampon de l'extrémité supérieure 132 du serpentin secondaire 130, formant entrée, tandis que le départ du liquide du circuit secondaire 300, à partir du ballon 150, est opéré à l'aide d'un tube de sortie 155 qui relie directement la sortie 154 et l'autre extrémité 134, formant sortie, du serpentin secondaire 130, en partie inférieure du ballon.

Deux cas principaux de fonctionnement du système peuvent être envisagés : d'une part le cas où le circulateur du circuit secondaire 300 reste constamment en fonctionnement et d'autre part le cas où le circulateur du circuit secondaire 300 peut être amené à s'arrêter.

Dans le cas où le circulateur 305 du circuit secondaire 300 reste constamment en fonctionnement, la commande marche-arrêt du générateur 210 de calories (respectivement de frigories) peut être effectuée à partir d'une sonde de température 310 située sur le retour du liquide du circuit secondaire en liaison avec l'entrée 152.

On notera que le montage illustré sur la figure 1bis présente a priori l'inconvénient d'introduire par le haut du ballon 150, les micro-particules de boue immanquablement présentes dans le fluide secondaire. Cependant l'injection tangentielle décrite précédemment permet à une grande partie de celles-ci de retomber par gravité le long de la paroi interne du ballon 150, vers le fond de celui-ci. En outre, comme on l'a indiqué précédemment, le tube d'échange coaxial est moins sujet à encrassement qu'un échangeur à plaque.

On notera également que pour le montage de la figure 1bis, utilisé en chauffage, mais dans lequel le ballon 150 est un ballon d'échange thermique, contrairement à un ballon de stockage, le fluide primaire arrive en bas du ballon et le fluide secondaire part en bas du ballon. Pour éviter des erreurs de montage par les installateurs il peut être prudent de prévoir un marquage clair, formant détrompeur, sur la paroi extérieure du ballon 150.

Il est difficile d'envisager d'utiliser les dispositions illustrées sur les figures 1 et 1bis précédemment décrites pour des applications réversibles de chauffage en hiver et de refroidissement en été.

En effet, si l'on voulait appliquer le montage de la figure 1 en mode chauffage, il y aurait stratification de température dans la partie haute du ballon 150 et la température serait alors imposée par la température d'entrée du fluide du circuit primaire 200. Ainsi si on utilise une pompe à chaleur pour former le générateur 210, le réfrigérant situé dans la partie supérieure des tubes coaxiaux sera en désurchauffe, ce qui se traduit par des températures supérieures à 100°C, typiquement 120°C pour une pompe à chaleur haute température, et pourrait aboutir à des zones d'ébullition locales du fluide caloporteur secondaire, qui est souvent de l'eau dans les installations de chauffage.

Un raisonnement symétrique s'applique pour le montage de la figure 1bis si l'on essaie d'utiliser ce montage en rafraîchissement. En effet dans ce cas l'on peut aboutir dans certains cas à la formation locale de glaçons.

Pour remédier à ces inconvénients, il est proposé dans le cadre de la présente invention, des moyens qui obligent le liquide secondaire qui revient au ballon 150, à balayer tout le volume du ballon 150 avant d'en ressortir.

Plusieurs solutions peuvent remplir cette fonction.

Une première solution est illustrée sur les figures 2 et 2bis, respectivement homologues des figures 1 et 1bis. Comme on le voit sur les figures 2 et 2bis, cette première solution consiste à modifier les montages précédemment décrits en regard des figures 1 et 1bis de sorte que le retour du liquide du circuit secondaire ne débouche plus dans l'extrémité du ballon 150 adjacente à l'entrée 132 dans le serpentin secondaire 130, mais débouche au contraire à l'extrémité opposée du ballon 150.

Ainsi selon la figure 2, alors que l'entrée 132 du serpentin secondaire 130 est située en partie inférieure du ballon 150, l'entrée 152 qui reçoit le retour du liquide secondaire, débouche en partie supérieure du ballon 150. On évite ainsi la stagnation du liquide en partie supérieure du ballon 150 et par conséquent une montée en température du liquide dans cette zone.

De même symétriquement, selon la figure 2bis, alors que l'entrée 132 du serpentin secondaire 130 est située en partie supérieure du ballon 150, l'entrée 152 qui reçoit le retour du liquide secondaire, débouche en partie inférieure du ballon 150. On évite ainsi la stagnation du liquide en zone inférieure du ballon 150 et par conséquent une chute en température du liquide dans cette zone.

Il en résulte que comme cela est schématisé par des flèches sur les figures 2 et 2bis, le fluide secondaire qui pénètre dans le ballon 150, par l'entrée 152, balaye tout l'échangeur 120/130 avant d'être aspiré par l'entrée 132 du serpentin secondaire 130.

Une deuxième solution permettant d'envisager un fonctionnement réversible est illustrée sur les figures 3 et 3bis également respectivement homologues des figures 1 et 1bis. Comme on le voit sur les figures 3 et 3bis, cette deuxième solution consiste à modifier les montages précédemment décrits en regard des figures 1 et 1bis en prolongeant les entrées 132 du serpentin secondaire 130, par un tube 133, préférentiellement placé au centre du solénoïde, de sorte que l'entrée 132 du serpentin secondaire 130 ne débouche plus dans l'extrémité du ballon 150 adjacente au retour du liquide du circuit secondaire, mais débouche au contraire à l'extrémité opposée du ballon 150.

Grâce à cette disposition, le tube 133 relié à l'entrée 132 du serpentin secondaire 130 aspire le liquide secondaire dans les parties du ballon où existe le risque de stratification précédemment mentionné.

Dans le cas où le circulateur 305 du circuit secondaire 300 peut être amené à s'arrêter, par exemple dans les applications de chauffage, certaines régulations coupent ce circulateur lorsque la température de consigne est atteinte. Dans ce cas les diverses variantes précédemment décrites et illustrées sur les figures 1, 1bis, 2, 2bis, 3 et 3bis présentent les inconvénients précédemment décrits pour les échangeurs à plaque d'entraîner des arrêts trop fréquents de la pompe à chaleur, voire dans certaines configurations de générer des déclenchements intempestifs de la sécurité pression.

Un premier moyen pour remédier à cet inconvénient consiste à asservir l'arrêt du générateur 210 placé sur le circuit primaire 200 sur celui du circulateur 305 placé sur le circuit secondaire 300. Dans ce cas les conditions d'utilisation précédemment décrites pour les montages des figures 1, 1bis, 2, 2bis, 3 et 3bis demeurent. C'est-à-dire que les montages des figures 1 et ibis sont utilisables uniquement en refroidissement et chauffage respectivement, tandis que les montages des figures 2, 2bis, 3 et 3bis sont utilisables en climatisation réversible. Dans ce contexte il est judicieux de garder comme précédemment l'asservissement du redémarrage de la pompe à chaleur sur une sonde de température 310 située sur le retour du liquide du circuit secondaire 300.

Néanmoins ce premier moyen n'est pas toujours possible dans des installations de circuit secondaire existant. En effet dans certains cas, le signal de marche / arrêt commandant le circulateur 305, n'est pas toujours accessible ou exploitable de manière simple par les systèmes de contrôle du générateur 210.

Si donc ce premier moyen n'est pas envisageable, diverses alternatives sont proposées dans le cadre de la présente invention.

Une première alternative, illustrée sur la figure 4, consiste à disposer dans la partie interne centrale de l'échangeur solénoïde à tubes coaxiaux, un cylindre 160 positionné à distance adaptée du solénoïde afin de favoriser un effet thermosiphon. Le fluide caloporteur secondaire s'écoule dans un sens à l'intérieur du cylindre 160, et dans le sens opposé sur l'extérieur du cylindre 160, balayant ainsi la surface externe de l'échangeur solénoïde. L'effet thermosiphon schématisé sur la figure 4 correspond à un fonctionnement en chauffage, tandis que celui schématisé sur la figure 4bis correspond à un fonctionnement en rafraîchissement. Cependant les montages illustrés sur les figures 4 et 4bis peuvent être utilisés indifféremment pour le chauffage ou le refroidissement.

Un tel écoulement thermosiphon permet de continuer à évacuer les calories (respectivement les frigories) et de limiter ainsi la vitesse de montée ou de descente en température et en pression.

On notera que les montages illustrés sur les figures 4 et 4bis sont respectivement homologues des figures 2 et 2bis. Cependant on peut bien sur également insérer un cylindre 160 générant un effet de thermosiphon dans les solénoïdes illustrés sur les figures 1 (fonctionnant uniquement en refroidissement), 1bis (fonctionnant uniquement en chauffage), ou 3 et 3bis (tous deux réversibles) pour obtenir le même effet de thermosiphon grâce à ce cylindre 160.

Le dispositif illustré sur la figure 4 présente un fonctionnement optimal en chauffage car au moment du redémarrage du circulateur, on puise dans la partie haute du ballon où l'eau est la plus chaude. Symétriquement, le dispositif illustré sur la figure 4bis présente un fonctionnement optimal en refroidissement car au moment du redémarrage du circulateur, on puise dans la partie basse du ballon où l'eau est la plus froide.

Une deuxième alternative illustrée sur les figures 5 et 5bis consiste à ajouter, sur la sortie 134 du serpentin secondaire 130, un clapet anti-retour 140. Un tel clapet anti-retour 140 est adapté pour être fermé lorsque le circulateur 305 du circuit secondaire est en service et pour être ouvert dans le cas contraire. Cette solution permet, dès l'arrêt du système, l'amorçage d'un effet thermosiphon comme illustré sur les figures 5 et 5bis, sous forme d'un écoulement à travers le serpentin secondaire 130 rebouclé par un écoulement sur la surface externe du solénoïde. Cette disposition permet de limiter la vitesse de montée en température et en pression. On évite ainsi les inconvénients précédemment annoncés inhérents aux échangeurs à plaque. A priori cependant le montage de la figure 5 n'est alors utilisable qu'en chauffage, tandis que le montage de la figure 5bis n'est utilisable qu'en refroidissement.

La encore on notera que les montages illustrés sur les figures 5 et 5bis sont respectivement homologues des figures 2 et 2bis. Cependant on peut également équiper d'un clapet anti-retour 140, permettant un effet de thermosiphon, la sortie 134 du serpentin secondaire 130 des solénoïdes illustrés sur 3 et 3bis (tous deux réversibles) pour obtenir le même effet de thermosiphon. A priori en revanche, on ne peut envisager d'équiper d'un tel clapet 140, les modes de réalisation illustrés sur les figures 1 et 1bis.

Bien entendu on peut envisager de coupler les deux alternatives précitées à base de cylindre 160 et de clapet 140. C'est-à-dire que l'on peut envisager des variantes de réalisation selon lesquelles il est prévu à la fois un cylindre 160 dans la partie centrale de l'échangeur solénoïde et un clapet 140 sur la sortie 134 du serpentin 130.

On notera que pour toutes les variantes illustrées sur les figures 4, 4bis, 5 et 5bis, il est judicieux d'asservir la commande démarrage-arrêt de la pompe à chaleur sur une sonde de température 312 à l'intérieur du ballon 150, sur l'extrémité de celui-ci adjacente au clapet 140, c'est-à-dire à l'extrémité de sortie 134 du serpentin secondaire 130. Cependant on peut améliorer encore le fonctionnement en asservissant l'arrêt de la pompe à chaleur sur cette sonde 312 et en asservissant le démarrage de la pompe à chaleur sur une seconde sonde 314 située dans le ballon 150 à l'extrémité opposée de celui-ci, c'est-à-dire sur l'extrémité du ballon 150 adjacente à l'entrée 132 du serpentin secondaire 130.

Selon l'ensemble des modes de réalisation conformes à la présente invention précédemment décrits, les entrées et sorties respectivement de chaque serpentin 120, 130 sont situées à proximité d'extrémités opposées du ballon 150.

Le dispositif illustré sur la figure 9 peut fonctionner en mode réversible.

La commande marche-arrêt du générateur de calories 210 (respectivement frigories) peut s'effectuer à partir d'une sonde de température 310 située sur le retour du liquide du circuit secondaire 300.

Comme dans le cas des figures 2 et 2bis, ou 3 et 3bis, le dispositif de la figure 9 fonctionne correctement lorsque le circulateur est constamment en fonctionnement. Il peut présenter des problèmes lorsque le circulateur 305 du circuit secondaire peut être amené à s'arrêter. Cependant dans ce cas on peut utiliser les solutions décrites précédemment en regard des figures 4, 4bis, 5 et 5bis pour limiter la vitesse de montée en température et en pression, afin d'éviter les inconvénients évoqués pour les échangeurs à plaque.

On obtient ainsi des échangeurs du type illustré sur les figures 11 et 12.

La figure 11 illustre un dispositif dans lequel un échangeur solénoïde à tubes coaxiaux 120/130 est entouré par un cylindre 162 positionné à distance judicieuse du solénoïde, entre celui-ci et la paroi interne du ballon 150. Le montage de la figure 11 est réversible.

La figure 12 illustre un dispositif dans lequel la sortie 134 du serpentin secondaire 130 est équipée d'un clapet anti-retour 140. La figure 12 correspond à un montage fonctionnant en chauffage. En alternative on peut concevoir un montage équipé d'un clapet anti-retour fonctionnant en refroidissement.

Bien évidement là encore on peut coupler les modes de réalisation illustrés sur les figures 11 et 12 en équipant à la fois l'échangeur d'un cylindre 162 et d'un clapet anti-retour 140.

Dans le cadre des dispositifs illustrés sur les figures 11 et 12, il est judicieux d'asservir la commande démarrage-arrêt de la pompe à chaleur sur une sonde de température 312 située à proximité de la sortie 134 du serpentin secondaire 130. On peut améliorer en asservissant l'arrêt de la pompe à chaleur sur une sonde de température 312 située à proximité de la sortie 134 du serpentin secondaire 130 et en asservissant le redémarrage de la pompe à chaleur sur une sonde 314 située à proximité de l'entrée 132 du serpentin secondaire 130.

On peut résumer les conditions de fonctionnement des modes de réalisation précédemment décrits, comme suit.

| | Chauffage seul | Refroidissement seul | Climatisation réversible |
|---|---|---|---|
| Circulateur Marche continue | | | |
| Figure 1 | Non | Oui | Non |
| Figure 1bis | Oui | Non | Non |
| Figure 2 | Oui | Oui | Oui |
| Figure 2bis | Oui | Oui | Oui |
| Figure 3 | Oui | Oui | Oui |
| Figure 3bis | Oui | Oui | Oui |
| Figure 9 | Oui | Oui | Oui |

| Circulateur marche discontinue | | | |
|---|---|---|---|
| Figure 4 | Oui | Oui | Oui |
| Figure 4bis | Oui | Oui | Oui |
| Figure 5 | Oui | Non | Non |
| Figure 5bis | Non | Oui | Non |
| Figure 11 | Oui | Oui | Oui |
| Figure 12 | Oui | Non | Non |

Comme on l'a indiqué précédemment, la présente invention s'applique en particulier à la réalisation d'un système de chauffage ou de climatisation à base de pompe à chaleur, notamment pour la rénovation d'installations de chauffage central ou de climatisation.

Dans ce contexte, l'échangeur à inertie précédemment décrit, peut être utilisé comme condenseur d'une pompe à chaleur dans une application chauffage et comme évaporateur dans une application froid.

Bien que de portée plus générale, la présente invention est particulièrement adaptée à la rénovation de systèmes de chauffage existant dans le domestique, grâce à l'utilisation de pompes à chaleur haute température à performance et conception améliorée, éventuellement couplée par un échangeur à ballon avec l'eau des chauffages existants.

La présente invention s'applique en particulier, mais non exclusivement à la réalisation d'une pompe à chaleur haute température avec cycle bi-étagé à injection partielle.

On a illustré sur la figure 13 annexée, la structure classique d'une telle pompe avec cycle bi-étagé à injection partielle. Comme cela est connu de l'homme de l'art, une telle pompe permet de produire de l'eau chaude à au moins 70°C en utilisant des fluides classiques généralement connues pour atteindre des températures inférieures, tels que le fluide connu sous la dénomination « R407c ».

On aperçoit sur la figure 13 annexée une pompe à chaleur comprenant un condenseur 400, un détendeur 410, un évaporateur 420 et deux compresseurs 430, 440 en série. Un premier élément échangeur de chaleur 450 est placé entre le détendeur 410 et l'évaporateur 420, en série d'une vanne 460 pilotée par une sonde de température 462 placée entre l'évaporateur et le premier compresseur 430. Un deuxième élément échangeur de chaleur 452 en relation d'échange avec le premier élément 450, est placé en série d'une vanne 470 entre la sortie du détendeur 410 et le point intermédiaire entre les deux compresseurs 430 et 440. La vanne 470 est pilotée par une sonde de température 472 placée sur l'entrée du second compresseur.

Dans le cadre de la présente invention, les inventeurs présentent cependant quelques perfectionnements à une telle pompe à chaleur à cycle bi-étagé et injection partielle.

Certains au moins de ces perfectionnements peuvent d'ailleurs être utilisés en combinaison.

Lors du fonctionnement d'une telle pompe classique, l'huile qui est entraînée dans les gaz a tendance à s'accumuler dans la partie haute pression. Pour égaliser les niveaux d'huile, une technique courante consiste à utiliser une liaison entre une bouteille de récupération d'huile située sur la ligne haute pression et le carter du compresseur basse pression, muni d'un détendeur électronique commandé par le niveau d'huile du carter du compresseur basse pression. Cette solution est cependant lourde pour être utilisée pour des applications domestiques. Ainsi dans le cadre de la présente invention, il est proposé de relier comme illustré sur la figure 14, les deux carters de compresseurs basse pression 430 et haute pression 440 par une liaison 480 munie d'une vanne 482, telle qu'une vanne TOR, que l'on ouvre uniquement au moment de l'arrêt de la pompe à chaleur. Cette disposition permet l'égalisation des niveaux d'huile entre les carters des deux compresseurs 430 et 440. Elle exploite le fait que contrairement aux pompes à chaleur industrielles, les pompes à chaleur domestiques ont généralement des cycles de fonctionnement suffisamment courts pour éviter que l'un des deux carters d'huile des deux compresseurs n'aient le temps de se vider.

Si malgré tout, le temps de cycle de la pompe à chaleur est trop long pour éviter que l'un des deux carters des compresseurs 430, 440, ne se vide de son huile, on peut utiliser, comme illustré sur la figure 15, un déshuileur 484 placé entre la sortie du compresseur haute pression 440 et le condenseur, et comportant une évacuation en série d'un capillaire de détente 486 qui conduit au carter de l'un des deux compresseurs, à savoir selon l'illustration de la figure 15 qui ne correspond qu'à une variante non limitative le compresseur basse pression 430. Le déshuileur 484 se vide périodiquement à travers le capillaire 486 dans l'un des carters des deux compresseurs.

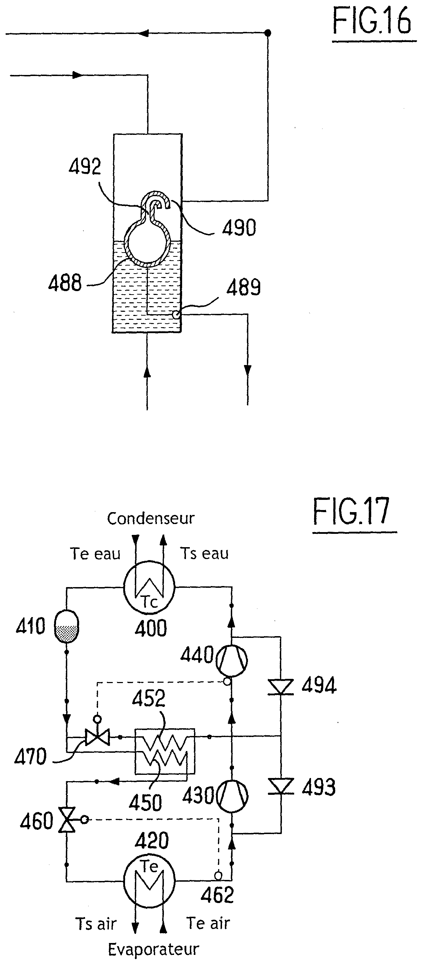

Une option pour contrôler la vidange périodique du déshuileur 484 est d'utiliser, comme illustré sur la figure 16, un flotteur 488 placé dans le carter du déshuileur 484 et adapté pour actionner ainsi périodiquement l'ouverture d'un robinet 489 conduisant au capillaire 486, lorsque le niveau dans le déshuileur 484 atteint un seuil prédéterminé.

La plupart des flotteurs connus sont cependant formés d'une coque mince dont la pression interne est faible, typiquement de l'ordre de quelques bars. Pour permettre à de tels flotteurs de résister aux pressions régnant dans l'étage haute pression, typiquement supérieures à 30 bars, on peut réaliser un petit orifice 490 dans la paroi du flotteur de manière à égaliser la pression externe et la pression interne du flotteur, et le cas échéant munir cet orifice d'un bec ou tube recourbé 492 de manière à éviter toute introduction de liquide, comme représenté sur la figure 16.

On a représenté sur la figure 17 une autre variante selon laquelle il est prévu un clapet anti-retour 493, 494 en parallèle respectivement de chaque compresseur 430, 440. Ces clapets 493, 494 permettent de n'utiliser qu'un seul des deux compresseurs dans certaines périodes de fonctionnement, où la puissance requise ne représente qu'une partie de la puissance du système, sans exiger un jeu de vannes coûteux.

Les compresseurs et leurs vitesses de rotation seront adaptés en fonction des fluides utilisés, des températures et puissances recherchée et de la compacité imposée. Le cas échéant on peut utiliser des compresseurs à vitesse variable pour répondre à la puissance de chauffage.

## Revendications

1. Dispositif échangeur de chaleur comprenant un serpentin (120) comportant une entrée (122) et une sortie (124) de liaison avec un circuit de fluide caloporteur primaire (200) et un ballon (150) dans lequel est placé ce serpentin (120), lequel ballon (150) est rempli d'un fluide caloporteur secondaire et comporte une entrée (152) et une sortie (154) de liaison avec un circuit secondaire (300), le serpentin (120) dans lequel circule le fluide caloporteur primaire logeant un serpentin secondaire (130) pour former un échangeur solénoïde à tubes coaxiaux et l'une des liaisons (152, 154) avec le circuit secondaire (300) étant reliée directement avec l'une des extrémités (132, 134) du serpentin secondaire (130), tandis que l'autre liaison (154, 152) avec le circuit secondaire ainsi que la deuxième extrémité (134, 132) du serpentin secondaire (130) débouchent dans le ballon (150), de sorte que les échanges entre le fluide caloporteur primaire et le fluide caloporteur secondaire, dans l'échangeur solénoïde à tubes coaxiaux s'opèrent à la fois en convection forcée à l'intérieur de celui-ci et en convection naturelle à l'extérieur de celui-ci, la sortie (154) du fluide secondaire étant reliée directement avec une extrémité du serpentin secondaire (130), tandis que l'entrée (152) du fluide secondaire débouche librement dans le ballon (150), qu'il comprend des moyens (133) qui obligent le liquide secondaire qui revient au ballon (150), à balayer l'échangeur (120, 130) avant d'être aspiré par l'entrée (132) du serpentin secondaire (130), **caractérisé par le fait que** les entrées et sorties respectivement de chaque serpentin (120, 130) sont situées à proximité d'extrémités opposées du ballon (150).

2. Dispositif selon la revendication 1, **caractérisé par le fait que** le retour du fluide secondaire dans le ballon (150) est opéré sous forme d'une injection tangentielle.

3. Dispositif selon l'une des revendications 1 ou 2, **caractérisé par le fait que** lesdits moyens (133) obligent le liquide secondaire qui revient au ballon (150) à balayer tout le volume du ballon (150) avant d'en ressortir.

4. Dispositif selon l'une des revendications 1 à 3, **caractérisé par le fait que** le retour (152) du liquide du circuit secondaire débouche dans l'extrémité du ballon (150) opposée à l'entrée (132) dans le serpentin secondaire (130).

5. Dispositif selon l'une des revendication 1 à 4, **caractérisé par le fait que** lesdits moyens (133) consistent en un tube prolongeant l'entrée du serpentin secondaire (130) de sorte que l'entrée (132) du serpentin secondaire (130) débouche dans l'extrémité du ballon (150) opposée au retour (152) du liquide du circuit secondaire.

6. Dispositif selon l'une des revendications 1 à 5, **caractérisé par le fait qu'**il comprend un cylindre (160, 162) positionné à distance adaptée du solénoïde afin de favoriser un effet thermosiphon.

7. Dispositif selon la revendication 6, **caractérisé par le fait que** le cylindre (160) est placé dans la partie interne centrale de l'échangeur solénoïde à tubes coaxiaux.

8. Dispositif selon l'une des revendications 1 à 7, **caractérisé par le fait qu'**il comprend un clapet anti-retour (140) sur la sortie (134) du serpentin secondaire (130).

9. Dispositif selon l'une des revendications 1 à 8, **caractérisé par le fait qu'**il comprend une pompe à chaleur contrôlant la température du fluide primaire et que la commande démarrage-arrêt de la pompe à chaleur est asservie sur une sonde de température (312) située à l'intérieur du ballon (150), sur l'extrémité de celui-ci adjacente à l'extrémité de sortie (134) du serpentin secondaire (130).

10. Dispositif selon l'une des revendications 1 à 8, **caractérisé par le fait qu'**il comprend une pompe à chaleur contrôlant la température du fluide primaire et que l'arrêt de la pompe à chaleur est asservi sur une sonde de température (312) située à l'intérieur du ballon (150) tandis que le démarrage de la pompe à chaleur est asservie sur une seconde sonde de température (314) située dans le ballon (150) à l'extrémité opposée de celui-ci.

11. Dispositif selon l'une des revendications 1 à 9, **caractérisé par le fait que** les deux tubes coaxiaux (120, 130) sont repliés sur eux-mêmes sensiblement à mi-longueur, de sorte que l'échangeur comprenne deux solénoïdes en série et de diamètre différent, imbriqués l'un dans l'autre, les entrées et sorties de chaque serpentin ou solénoïde (120, 130) étant sensiblement adjacentes.

12. Dispositif selon la revendication 11, **caractérisé par le fait qu'**il comprend un cylindre (162) positionné à distance adaptée du solénoïde sur l'extérieur de celui-ci, afin de favoriser un effet thermosiphon.

13. Système de chauffage ou de climatisation à base de pompe à chaleur, notamment pour la rénovation d'installations de chauffage central ou de climatisation, **caractérisé par le fait qu'**il comprend au moins un dispositif échangeur de chaleur conforme à l'une des revendications 1 à 12.

14. Système selon la revendication 13, **caractérisé par le fait que** le dispositif échangeur de chaleur forme un condenseur d'une pompe à chaleur dans une application chauffage et un évaporateur dans une application froid.

## Patentansprüche

1. Wärmetauschervorrichtung, umfassend eine Schlange (120), aufweisend einen Einlass (122) und einen Auslass (124) in Verbindung mit einem Kreis eines primären Wärmeträgerfluids (200) und einen Ballon (150), in welchem diese Schlange (120) platziert ist, wobei der Ballon (150) mit einem sekundären Wärmeträgerfluid gefüllt ist und einen Einlass (152) und einen Auslass (154) in Verbindung mit einem Sekundärkreis (300) aufweist, wobei die Schlange (120), in welcher das primäre Wärmeträgerfluid zirkuliert, eine sekundäre Schlange (130) aufnimmt, um einen Solenoidtauscher mit koaxialen Rohren zu bilden und eine der Verbindungen (152, 154) mit dem Sekundärkreis (300) direkt mit einem der Enden (132, 134) der sekundären Schlange (130) verbunden ist, wobei die andere Verbindung (154, 152) mit dem Sekundärkreis sowie das zweite Ende (134, 132) der sekundären Schlange (130) in den Ballon (150) ausmünden, so dass die Austausche zwischen dem primären Wärmeträgerfluid und dem sekundären Wärmeträgerfluid in dem Solenoidtauscher mit koaxialen Rohren sowohl in Zwangskonvektion im Inneren desselben und in natürlicher Konvektion außerhalb desselben erfolgen, wobei der Auslass (154) des sekundären Fluids direkt mit einem Ende der sekundären Schlange (130) verbunden ist, wogegen der Einlass (152) des sekundären Fluids frei in den Ballon (150) ausmündet, dass sie Mittel (133) umfasst, welche das sekundäre Fluid zwingen, das in den Ballon (150) zurückfließt, den Tauscher (120, 130) vor dem Ansaugen durch den Einlass (132) der sekundären Schlange (130) zu spülen, **dadurch gekennzeichnet, dass** sich die jeweiligen Einlässe und Auslässe jeder Schlange (120, 130) in der Nähe entgegengesetzter Enden des Ballons (150) befinden.

2. Vorrichtung nach Anspruch 1, **dadurch gekennzeichnet, dass** der Rücklauf des sekundären Fluids in den Ballon (150) in Form einer Tangentialinjektion erfolgt.

3. Vorrichtung nach einem der Ansprüche 1 oder 2, **dadurch gekennzeichnet, dass** die Mittel (133) die sekundäre Flüssigkeit, die in den Ballon (150) zurückkehrt, zwingen, das gesamte Volumen des Ballons (150) zu spülen, bevor der Austritt daraus erfolgt.

4. Vorrichtung nach einem der Ansprüche 1 bis 3, **dadurch gekennzeichnet, dass** der Rücklauf (152) der Flüssigkeit des Sekundärkreises in das Ende des Ballons (150) gegenüber dem Einlass (132) in die sekundäre Schlange (130) ausmündet.

5. Vorrichtung nach einem der Ansprüche 1 bis 4, **dadurch gekennzeichnet, dass** die Mittel (133) aus einem Rohr bestehen, welches den Einlass (132) der sekundären Schlange (130) derart verlängert, dass der Einlass (132) der sekundären Schlange (130) in das Ende des Ballons (150) gegenüber dem Rücklauf (152) der Flüssigkeit des Sekundärkreises ausmündet.

6. Vorrichtung nach einem der Ansprüche 1 bis 5, **dadurch gekennzeichnet, dass** sie einen Zylinder (160, 162) umfasst, der in angepasstem Abstand vom Solenoid positioniert ist, um einen Thermosiphoneffekt zu fördern.

7. Vorrichtung nach Anspruch 6, **dadurch gekennzeichnet, dass** der Zylinder (160) in dem zentralen inneren Teil des Solenoidtauschers mit koaxialen Rohren platziert ist.

8. Vorrichtung nach einem der Ansprüche 1 bis 7, **dadurch gekennzeichnet, dass** sie ein Rückschlagventil (140) auf dem Auslass (134) der sekundären Schlange (130) umfasst.

9. Vorrichtung nach einem der Ansprüche 1 bis 8, **dadurch gekennzeichnet, dass** sie eine Wärmepumpe umfasst, welche die Temperatur des primären Fluids steuert und dass die Start-Stopp-Steuerung der Wärmepumpe über eine Temperatursonde (312) geregelt wird, die sich im Inneren des Ballons (150) an dem Ende von ihm befindet, das dem Auslassende (134) der sekundären Schlange (130) benachbart ist.

10. Vorrichtung nach einem der Ansprüche 1 bis 8, **dadurch gekennzeichnet, dass** sie eine Wärmepumpe umfasst, welche die Temperatur des primären Fluids steuert und dass der Stopp der Wärmepumpe über eine Temperatursonde (312) geregelt wird, die sich im Inneren des Ballons (150) befindet, wogegen der Start der Wärmepumpe über eine zweite Temperatursonde (314) geregelt wird, die sich in dem Ballon (150) am entgegengesetzten Ende desselben befindet.

11. Vorrichtung nach einem der Ansprüche 1 bis 9, **dadurch gekennzeichnet, dass** die zwei koaxialen Rohre (120, 130) etwa auf halber Länger auf sich selbst gefaltet sind, so dass der Tauscher zwei Solenoide in Reihe und mit unterschiedlichem Durchmesser umfasst, die ineinander verschachtelt sind, wobei die Einlässe und Auslässe jeder Schlange oder Solenoid (120, 130) etwa benachbart sind.

12. Vorrichtung nach Anspruch 11, **dadurch gekennzeichnet, dass** sie einen Zylinder (162) umfasst, der in geeignetem Abstand von Solenoid auf der Außenseite desselben positioniert ist, um einen Thermosiphoneffekt zu fördern.

13. Heiz- oder Klimatisierungssystem auf Basis einer Wärmepumpe, insbesondere für die Erneuerung von zentralen Heiz- oder Klimatisierungsanlagen, **dadurch gekennzeichnet, dass** es mindestens eine Wärmetauschervorrichtung nach einem der Ansprüche 1 bis 12 umfasst.

14. System nach Anspruch 13, **dadurch gekennzeichnet, dass** die Wärmetauschervorrichtung einen Verdichter einer Wärmepumpe in einer Heizanwendung und einen Verdampfer in einer Kälteanwendung bildet.

## Claims

1. A heat exchange device comprising a coil (120) comprising an inlet (122) and an outlet (124) for connection with a primary heat-transfer fluid circuit (200) and a tank (150) in which this coil (120) is placed, said tank (150) is filled with a secondary heat-transfer fluid and comprises an inlet (152) and an outlet (154) for connection with a secondary circuit (300), the coil (120) in which the primary heat-transfer fluid circulates housing a secondary coil (130) to form a coaxial tube solenoid exchanger and one of the connections (152, 154) with the secondary circuit (300) being connected directly with one of the ends (132, 134) of the secondary coil (130), while the other connection (154, 152) with the secondary circuit as well as the second end (134, 132) of the secondary coil (130) lead into the tank (150), so that exchanges between the primary heat-transfer fluid and the secondary heat-transfer fluid in the coaxial tube solenoid exchanger, occur both in forced convection in the interior thereof and in natural convection in the exterior thereof, the outlet (154) of the secondary fluid being connected directly with one end of the secondary coil (130), while the inlet (152) of the secondary fluid leads freely into the tank (150), which comprises means (133) which force the secondary liquid which returns to the tank (150) to sweep the exchanger (120, 130) before being aspired by the inlet (132) of the secondary coil (130), **characterized by** the fact that the inlets and outlets, respectively of each coil (120, 130), are situated in proximity to opposite ends of the tank (150).

2. The device according to claim 1, **characterized by** the fact that the return of the secondary fluid into the tank (150) is accomplished in the form of a tangential injection.

3. The device according to one of claims 1 or 2, **characterized by** the fact that said means (133) force the secondary liquid which returns to the tank (150) to sweep the entire volume of the tank (150) before leaving it.

4. The device according to one of claims 1 to 3, **characterized by** the fact that the return (152) of the liquid of the secondary circuit leads into the end of the tank (150) opposite to the inlet (132) into the secondary coil (130).

5. The device according to one of claims 1 to 4, **characterized by** the fact that said means (133) consist of a tube extending the inlet of the secondary coil (130) so that the inlet (132) of the secondary coil (130) leads into the end of the tank (150) opposite to the return (152) of the liquid of the secondary circuit.

6. The device according to one of claims 1 to 5, **characterized by** the fact that it comprises a cylinder (160, 162) positioned at a suitable distance from the solenoid so as to enable a thermosiphon effect.

7. The device according to claim 6, **characterized by** the fact that the cylinder (160) is placed in the central internal portion of the coaxial tube solenoid exchanger.

8. The device according to one of claims 1 to 7, **characterized by** the fact that it comprises a one-way valve (140) on the outlet (134) of the secondary coil (130) .

9. The device according to one of claims 1 to 8, **characterized by** the fact that it comprises a heat pump controlling the temperature of the primary fluid and that the start-stop control of the heat pump is servo-controlled by a temperature probe (312) situated in the interior of the tank (150), on the end of it adjacent to the outlet end (134) of the secondary coil (130).

10. The device according to one of claims 1 to 8, **characterized by** the fact that it comprises a heat pump controlling the temperature of the primary fluid and that the stopping of the heat pump is servo-controlled by a temperature probe (312) situated in the interior of the tank (150) while the starting of the heat pump is servo-controlled by a second temperature probe (314) situated in the tank (150), at the opposite end thereof.

11. The device according to one of claims 1 to 9, **characterized by** the fact that the two coaxial tubes (120, 130) are folded over themselves substantially at mid-length, so that the exchanger comprises two solenoids in series and with different diameters, nested in one another, the inlets and outlets of each coil or solenoid (120, 130) being substantially adjacent.

12. The device according to claim 11, **characterized by** the fact that it comprises a cylinder (162) positioned at a suitable distance from the solenoid on the exterior thereof, so as to enable a thermosiphon effect.

13. A heat-pump based heating or air conditioning system, particularly for the renovation of central heating installations, **characterized by** the fact that it comprises at least one heat exchanger device conforming to one of claims 1 to 12.

14. The system according to claim 13, **characterized by** the fact that the heat exchanger device forms a condenser of a heat pump in a heating application and an evaporator in a cooling application.
